# EUROPEAN PATENT SPECIFICATION

(11) **EP 3 322 236 B1**
(45) Date of publication and mention of the grant of the patent: **29.01.2020**
(21) Application number: 16823705.5
(22) Date of filing: 06.05.2016
(51) Int. Cl.: H04W 60/04, H04W 4/00

(54) **METHOD AND APPARATUS FOR PROCESSING DEVICE TRIGGERING INFORMATION**
VERFAHREN UND VORRICHTUNG ZUR VERARBEITUNG VON VORRICHTUNGSAUSLÖSERINFORMATIONEN
PROCÉDÉ ET APPAREIL DE TRAITEMENT D'INFORMATIONS DE DÉCLENCHEMENT DE DISPOSITIF

(30) Priority: 10.07.2015 CN 201510405015
(43) Date of publication of application: 16.05.2018
(73) Proprietor: ZTE Corporation, Shenzhen, Guangdong 518057 (CN)
(72) Inventor: HONG, Yingjie, Shenzhen Guangdong 518057 (CN)
(74) Representative: Deambrogi, Edgardo
(86) International application number: PCT/CN2016/081325
(87) International publication number: WO 2017/008558

(56) References cited:
- WO-A1-2015/026109
- CN-A- 104 010 325
- CN-A- 104 104 713
- CN-A- 104 756 540
- US-A1- 2014 089 442
- "3rd Generation Partnership Project; Technical Specification Group Services and System Aspects; Architecture enhancements to facilitate communications with packet data networks and applications (Release 12)", 3GPP STANDARD; 23682-C20, 3RD GENERATION PARTNERSHIP PROJECT (3GPP)?, MOBILE COMPETENCE CENTRE ; 650, ROUTE DES LUCIOLES ; F-06921 SOPHIA-ANTIPOLIS CEDEX ; FRANCE , 20 June 2014 (2014-06-20), XP050906660, Retrieved from the Internet: URL:http://www.3gpp.org/ftp/Specs/2014-12/ Rel-12/23_series/ [retrieved on 2014-06-20]
- LG ELECTRONICS: "Solution for key issue - canceling previously submitted trigger messages", 3GPP DRAFT; S2-123824_SOLUTION FOR KEY ISSUE-CANCELLING PREVIOUSLY SUBMITTED TRIGGER MESSAGES, 3RD GENERATION PARTNERSHIP PROJECT (3GPP), MOBILE COMPETENCE CENTRE ; 650, ROUTE DES LUCIOLES ; F-06921 S , vol. SA WG2 2 October 2012 (2012-10-02), XP050683529, Retrieved from the Internet: URL:http://www.3gpp.org/ftp/tsg_sa/WG2_Arc h/TSGS2_93_Sofia/Docs/ [retrieved on 2012-10-02]
- 3GPP: 'Machine-Type and Other Mobile Data Applications Communications Enhancements (Release 12' 3GPP TR 23.887 VL1.0 31 July 2013, XP055348545

## Description

### Technical Field

The present disclosure relates to, but is not limited to, the field of communications.

### Background

In an international standard of one Machine to Machine Communications (oneM2M), an Application Entity (AE) is an application logic in the Internet of things oneM2M, for example, a telemedical blood glucose monitoring application. A Common Service Entity (CSE) may include a set of service functions defined by the oneM2M. These functions may be opened to an AE through an Mca reference point, may be opened to another CSE through an Mcc reference point, and may be opened to a Network Service Entity (NSE) through an Mcn reference point. An underlying NSE may provide underlying network services to a CSE. One node may include at least one CSE and/or one AE. An Internet of things device or gateway or service platform may include one node. An Application Dedicated Node (ADN) may include at least one AE, but may not include any CSE. The AE of the ADN may be defined as an ADN-AE. An Application Service Node (ASN) may include one CSE and at least one AE. The AE of the ASN may be defined as an ASN-AE, and the CSE of the ASN may be defined as an ASN-CSE. A Middle Node (MN) may include one CSE, and may further include an AE. The AE of the MN may be defined as an MN-AE, and the CSE of the MN may be defined as an MN-CSE. An Infrastructure Node (IN) may include one CSE, and may further include an AE. The AE of the IN may be defined as an IN-AE, and the CSE of the IN may be defined as an IN-CSE.

Mca is a reference point defined by the oneM2M between an AE and a CSE. Mcc is a reference point defined by the oneM2M between a CSE and a CSE. Mcn is a reference point defined by the oneM2M between a CSE and an underlying network communication entity. Mcc' is a reference point defined by the oneM2M between IN-CSEs of two M2M Service Provider (SP) domains.

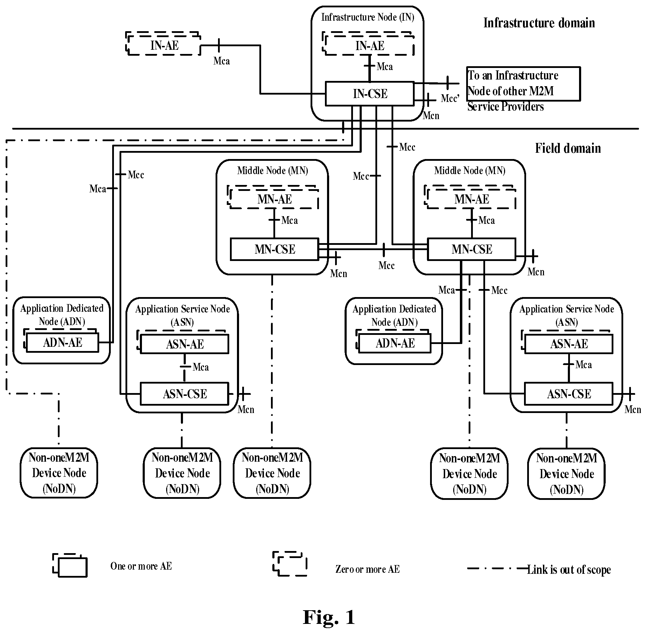

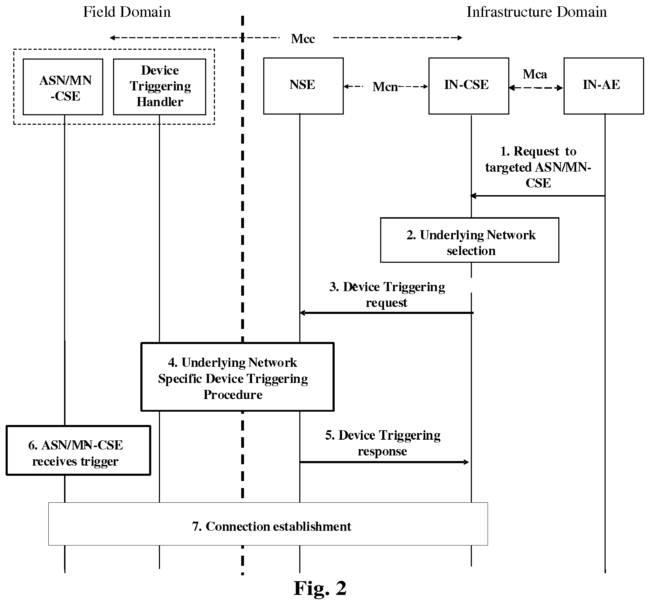

Fig. 1 is a schematic diagram of a relationship between logical entities and devices. Fig. 2 is a schematic diagram of a device triggering flow. As shown in Fig. 1 and Fig. 2, an IN-CSE may send, through an Mcn reference point, a device triggering message to request an underlying network to activate a device. An IN-AE may request to communicate with the device (for example, an ASN-CSE or an MN-CSE). The IN-CSE may find that the device is offline or is not activated, and therefore select a proper underlying network to send the device triggering message to activate the device. The IN-CSE may send a device triggering message, which may include an identifier of the IN-CSE, an underlying device identifier and the like, to the underlying network through the Mcn reference point. A device triggering method in the abovementioned flow may not implement cancelation or updating of the device triggering message.

For a problem that a device triggering method may not implement cancelation or updating of a device triggering message, there is yet no effective solution at present.

The standard technical specification 3GPP TS 23.682 V12.2.0 (2014-06) relates to architecture enhancements to facilitate communications with packet data networks and applications. However, the above mentioned problem still remains unsolved by the above mentioned document.

### Summary

The below is a summary about a subject matter described in the present disclosure in detail. The summary is not intended to limit the scope of protection of the claims.

The invention is a method for processing device triggering information as defined in claim 1 and an apparatus for processing device triggering information, arranged on an Internet of things service platform, as defined in claim 7.

Some embodiments of the present disclosure provide a method and apparatus for processing device triggering information, which may implement cancelation or updating of a device triggering message.

According to an embodiment of the present disclosure, a method for processing device triggering information is provided, which may include the following acts.

An Internet of things service platform may send to an underlying network a first device triggering message for triggering a device registered on the Internet of things service platform, and store a first identifier corresponding to the first device triggering message.

The Internet of things service platform may send a second device triggering message to the underlying network. The second device triggering message may contain the first identifier, and the second device triggering message may be used for indicating the underlying network to cancel or update the first device triggering message according to the first identifier.

In an exemplary embodiment, the Internet of things service platform may further create a second triggering resource after sending the second device triggering message to the underlying network. The second triggering resource may store a second identifier corresponding to the second triggering resource.

In an exemplary embodiment, in a case that the second device triggering message sent to the underlying network by the Internet of things service platform may be used for cancelling the first device triggering message, the Internet of things service platform may delete the first identifier or delete both the first identifier and the second identifier after receiving a cancelation success response from the underlying network.

In an exemplary embodiment, the Internet of things service platform may delete the first identifier in one of the following manners.

The first identifier in a registration resource may be deleted or an identifier attribute corresponding to the first identifier in the registration resource may be set to be null. Herein, the registration resource may be a resource created when the device is registered on the Internet of things service platform, and the registration resource may store the first identifier.

A first triggering resource may be deleted. Herein, the first triggering resource may be a resource created when the Internet of things service platform sends the first device triggering message to the underlying network, and the first triggering resource may store the first identifier.

The Internet of things service platform may delete the second identifier in the following manner.

A second triggering resource may be deleted. Herein, the second triggering resource may be a resource created after the Internet of things service platform sends the second device triggering message to the underlying network, and the second triggering resource may store the second identifier corresponding to the second triggering resource.

In an exemplary embodiment, in a case that the second device triggering message sent to the underlying network by the Internet of things service platform may be used for updating the first device triggering message, the Internet of things service platform may store the second identifier after receiving an update success response from the underlying network.

In an exemplary embodiment, the Internet of things service platform may store the second identifier in one of the following manners.

An identifier attribute of a registration resource corresponding to the first identifier may be updated with the second identifier. Herein, the registration resource may be a resource created when the device is registered on the Internet of things service platform and the registration resource may initially store the first identifier.

An identifier attribute of a first triggering resource corresponding to the first identifier may be updated with the second identifier. The first triggering resource may be updated according to the second triggering message. Herein, the first triggering resource may be a resource created when the Internet of things service platform sends the first device triggering message to the underlying network, and the first triggering resource may initially store the first identifier.

An identifier attribute of a first triggering resource corresponding to the first identifier may be updated with the second identifier. The first triggering resource may be updated according to the second triggering resource. The second triggering resource may be deleted. Herein, the first triggering resource may be a resource created when the Internet of things service platform sends the first device triggering message to the underlying network, and the first triggering resource may initially store the first identifier.

The second identifier may be stored in the second triggering resource, and the first triggering resource may be deleted.

In an exemplary embodiment, the first device triggering message sent by the Internet of things service platform may contain the first identifier. The second device triggering message sent by the Internet of things service platform may further contain the second identifier corresponding to the second device triggering message.

According to another embodiment of the present disclosure, an apparatus for processing device triggering information is further provided. The apparatus may be arranged on an Internet of things service platform and may include a first sending module and a second sending module.

The first sending module may be configured to send to an underlying network a first device triggering message for triggering a device registered on the Internet of things service platform, and store a first identifier corresponding to the first device triggering message.

The second sending module may be configured to send a second device triggering message to the underlying network. The second device triggering message may contain the first identifier, and the second device triggering message may be used for indicating the underlying network to cancel or update the first device triggering message according to the first identifier.

In an exemplary embodiment, the device may further include a creation module.

The creation module may be configured to, after the second sending module sends the second device triggering message to the underlying network, create a second triggering resource. The second triggering resource may store a second identifier corresponding to the second triggering resource.

In an exemplary embodiment, the device may further include a deletion module.

The deletion module may be configured to, in a case that the second device triggering message sent to the underlying network by the second sending module may be used for cancelling the first device triggering message, delete the first identifier or delete both the first identifier and the second identifier after a cancelation success response is received from the underlying network.

The deletion module may include at least one of a first deletion unit, a second deletion unit and a third deletion unit.

The first deletion unit may be configured to delete the first identifier in a registration resource or set an identifier attribute corresponding to the first identifier in the registration resource to be null. Herein, the registration resource may be a resource created when the device is registered on the Internet of things service platform, and the registration resource may store the first identifier.

The second deletion unit may be configured to delete a first triggering resource. Herein, the first triggering resource may be a resource created when the Internet of things service platform sends the first device triggering message to the underlying network, and the first triggering resource may store the first identifier.

The third deletion unit may be configured to delete a second triggering resource. Herein, the second triggering resource may be a resource created after the Internet of things service platform sends the second device triggering message to the underlying network, and the second triggering resource may store the second identifier corresponding to the second triggering resource.

In an exemplary embodiment, the device may further include an updating module.

The updating module may be configured to, in a case that the second device triggering message sent to the underlying network by the second sending module may be used for updating the first device triggering message, store the second identifier after an update success response is received from the underlying network.

In an exemplary embodiment, the updating module may include at least one of a first updating unit, a second updating unit, a third updating unit and a fourth updating unit.

The first updating unit may be configured to update an identifier attribute of a registration resource corresponding to the first identifier with the second identifier. Herein, the registration resource may be a resource created when the device is registered on the Internet of things service platform, and the registration resource may initially store the first identifier.

The second updating unit may be configured to update an identifier attribute of a first triggering resource corresponding to the first identifier with the second identifier, and update the first triggering resource according to the second triggering message. Herein, the first triggering resource may be a resource created when the Internet of things service platform sends the first device triggering message to the underlying network, and the first triggering resource may store the first identifier.

The third updating unit may be configured to update an identifier attribute of a first triggering resource corresponding to the first identifier with the second identifier, update the first triggering resource according to the second triggering resource, and deleting the second triggering resource. Herein the first triggering resource may be a resource created when the Internet of things service platform sends the first device triggering message to the underlying network, and the first triggering resource may store the first identifier.

The fourth updating unit may be configured to store the second identifier in the second triggering resource, and delete the first triggering resource.

In an exemplary embodiment, the first device triggering message sent by the first sending module may contain the first identifier, and the second device triggering message sent by the second sending module may further contain the second identifier corresponding to the second device triggering message.

By some embodiments of the present disclosure, a problem that a device triggering method may not implement cancelation or updating of a device triggering message may be solved, and cancelation or updating of the device triggering message may be achieved.

After the drawings and detailed descriptions are read and understood, the other aspects may be comprehended.

### Brief Description of the Drawings

Fig. 1 is a schematic diagram of a relationship between logical entities and devices;
Fig. 2 is a sequence diagram of a device triggering flow;
Fig. 3 is a flowchart of a method for processing device triggering information according to an embodiment of the present disclosure;
Fig. 4 is a structure block diagram of an apparatus for processing device triggering information according to an embodiment of the present disclosure;
Fig. 5 is a sequence diagram of canceling or updating a device triggering message according to an exemplary embodiment of the present disclosure;
Fig. 6 is a first sequence diagram of canceling a triggering message according to an exemplary embodiment of the present disclosure;
Fig. 7 is a first sequence diagram of updating a triggering message according to an exemplary embodiment of the present disclosure;
Fig. 8 is a second sequence diagram of canceling a triggering message according to an exemplary embodiment of the present disclosure;
Fig. 9 is a second sequence diagram of updating a triggering message according to an exemplary embodiment of the present disclosure;
Fig. 10 is a third sequence diagram of canceling a triggering message according to an exemplary embodiment of the present disclosure; and
Fig. 11 is a third sequence diagram of updating a triggering message according to an exemplary embodiment of the present disclosure.

### Detailed Description of the Embodiments

Implementation modes of the present disclosure will be described below in combination with the drawings. It is important to note that the embodiments in the application and various modes in the embodiments may be combined without conflicts.

It is important to note that terms "first", "second" and the like in the specification, claims and drawings of the present disclosure are adopted not to describe a specific sequence or order but to distinguish similar objects.

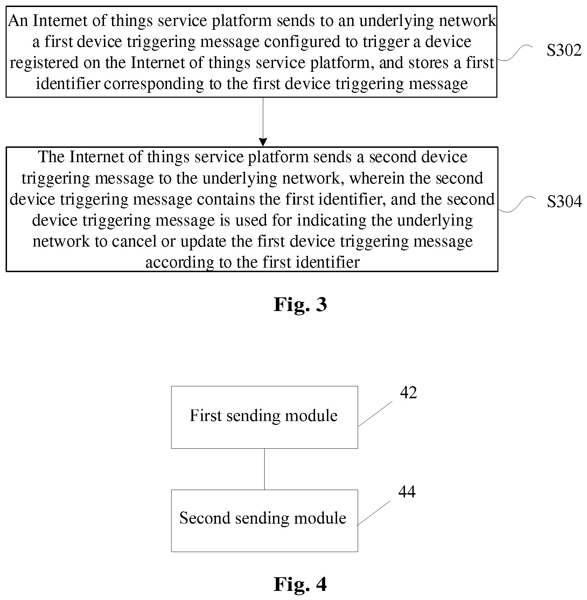

An embodiment provides a method for processing device triggering information. Fig. 3 is a flowchart of a method for processing device triggering information according to an embodiment of the present disclosure. As shown in Fig. 3, the flow may include the following steps.

At step S302, an Internet of things service platform may send to an underlying network a first device triggering message for triggering a device registered on the Internet of things service platform, and store a first identifier corresponding to the first device triggering message.

At step S304, the Internet of things service platform may send a second device triggering message to the underlying network. The second device triggering message may contain the first identifier, and the second device triggering message may be used for indicating the underlying network to cancel or update the first device triggering message according to the first identifier.

By the steps, a problem that a device triggering method may not implement cancelation or updating of a device triggering message may be solved, and cancelation or updating of the device triggering message may be achieved.

In the embodiment, the Internet of things service platform may further create a second triggering resource after sending the second device triggering message to the underlying network. The second triggering resource may store a second identifier corresponding to the second triggering resource.

In the embodiment, in a case that the second device triggering message sent to the underlying network by the Internet of things service platform may be used for cancelling the first device triggering message, the Internet of things service platform may delete the first identifier or delete both the first identifier and the second identifier after receiving a cancelation success response from the underlying network.

In the embodiment, the Internet of things service platform may delete the first identifier in one of the following manners.

The first identifier in a registration resource may be deleted or an identifier attribute corresponding to the first identifier in the registration resource may be set to be null. Herein, the registration resource may be a resource created when the device is registered on the Internet of things service platform, and the registration resource may store the first identifier (that is, the first identifier may be stored in the registration resource).

A first triggering resource may be deleted. Herein, the first triggering resource may be a resource created when the Internet of things service platform sends the first device triggering message to the underlying network, and the first triggering resource may store the first identifier.

The Internet of things service platform may delete the second identifier in the following manner. A second triggering resource may be deleted. Herein, the second triggering resource may be a resource created after the Internet of things service platform sends the second device triggering message to the underlying network, and the second triggering resource may store the second identifier corresponding to the second triggering resource.

In the embodiment, in a case that the second device triggering message sent to the underlying network by the Internet of things service platform may be used for updating the first device triggering message, the Internet of things service platform may store the second identifier after receiving an update success response from the underlying network.

In the embodiment, the Internet of things service platform may store the second identifier in one of the following manners.

An identifier attribute of a registration resource corresponding to the first identifier may be updated with the second identifier (that is, the first identifier stored in the identifier attribute of the registration resource may be replaced with the second identifier). Herein, the registration resource may be a resource created when the device is registered on the Internet of things service platform and the registration resource may initially store the first identifier.

An identifier attribute of a first triggering resource corresponding to the first identifier may be updated with the second identifier. The first triggering resource may be updated according to the second triggering message. Herein, the first triggering resource may be a resource created when the Internet of things service platform sends the first device triggering message to the underlying network, and the first triggering resource may initially store the first identifier.

An identifier attribute of a first triggering resource corresponding to the first identifier may be updated with the second identifier. The first triggering resource may be updated according to the second triggering resource. The second triggering resource may be deleted. Herein, the first triggering resource may be a resource created when the Internet of things service platform sends the first device triggering message to the underlying network, and the first triggering resource may initially store the first identifier.

The second identifier may be stored in the second triggering resource, and the first triggering resource may be deleted.

In the embodiment, the first device triggering message sent by the Internet of things service platform may contain the first identifier. The second device triggering message sent by the Internet of things service platform may further contain the second identifier corresponding to the second device triggering message.

Another embodiment provides an apparatus for processing device triggering information. The device may be arranged in an Internet of things service platform, and may be configured to implement the abovementioned embodiment and exemplary implementation modes, and what has been described will not be elaborated. For example, term "module", used below, may be a combination of software and/or hardware capable of realizing a preset function. Although the device described in the following embodiment is preferably implemented with software, implementation with hardware or a combination of the software and the hardware is also possible and conceivable.

Fig. 4 is a structure block diagram of an apparatus for processing device triggering information according to an embodiment of the present disclosure. As shown in Fig. 4, the device may include a first sending module 42 and a second sending module 44.

The first sending module 42 may be configured to send to an underlying network a first device triggering message for triggering a device registered on the Internet of things service platform, and store a first identifier corresponding to the first device triggering message.

The second sending module 44 may be configured to send a second device triggering message to the underlying network. The second device triggering message may contain the first identifier, and the second device triggering message may be used for indicating the underlying network to cancel or update the first device triggering message according to the first identifier.

By the device, a problem that a device triggering method may not implement cancelation or updating of a device triggering message may be solved, and cancelation or updating of the device triggering message may be achieved.

In the embodiment, the device may further include a creation module.

The creation module may be configured to, after the second sending module sends the second device triggering message to the underlying network, create a second triggering resource. The second triggering resource may store a second identifier corresponding to the second triggering resource.

In the embodiment, the device may further include a deletion module.

The deletion module may be configured to, in a case that the second device triggering message sent to the underlying network by the second sending module may be used for cancelling the first device triggering message, delete the first identifier or delete both the first identifier and the second identifier after a cancelation success response is received from the underlying network.

In the embodiment, the deletion module may include at least one of a first deletion unit, a second deletion unit and a third deletion unit.

The first deletion unit may be configured to delete the first identifier in a registration resource or set an identifier attribute corresponding to the first identifier in the registration resource to be null. Herein, the registration resource may be a resource created when the device is registered on the Internet of things service platform, and the registration resource may store the first identifier.

The second deletion unit may be configured to delete a first triggering resource. Herein, the first triggering resource may be a resource created when the Internet of things service platform sends the first device triggering message to the underlying network, and the first triggering resource may store the first identifier.

The third deletion unit may be configured to delete a second triggering resource. Herein, the second triggering resource may be a resource created after the Internet of things service platform sends the second device triggering message to the underlying network, and the second triggering resource may store the second identifier corresponding to the second triggering resource.

In the embodiment, the device may further include an updating module.

The updating module may be configured to, in a case that the second device triggering message sent to the underlying network by the second sending module may be used for updating the first device triggering message, store the second identifier after an update success response is received from the underlying network.

In the embodiment, the updating module may include at least one of a first updating unit, a second updating unit, a third updating unit and a fourth updating unit.

The first updating unit may be configured to update an identifier attribute of a registration resource corresponding to the first identifier with the second identifier. Herein, the registration resource may be a resource created when the device is registered on the Internet of things service platform, and the registration resource may initially store the first identifier.

The second updating unit may be configured to update an identifier attribute of a first triggering resource corresponding to the first identifier with the second identifier, and update the first triggering resource according to the second triggering message. Herein, the first triggering resource may be a resource created when the Internet of things service platform sends the first device triggering message to the underlying network, and the first triggering resource may store the first identifier.

The third updating unit may be configured to update an identifier attribute of a first triggering resource corresponding to the first identifier with the second identifier, update the first triggering resource according to the second triggering resource, and deleting the second triggering resource. Herein the first triggering resource may be a resource created when the Internet of things service platform sends the first device triggering message to the underlying network, and the first triggering resource may store the first identifier.

The fourth updating unit may be configured to store the second identifier in the second triggering resource, and delete the first triggering resource.

In the embodiment, the first device triggering message sent by the first sending module may contain the first identifier, and the second device triggering message sent by the second sending module may further contain the second identifier corresponding to the second device triggering message.

In the embodiments, the Internet of things service platform may be an IN-CSE.

The present disclosure will be described below in combination with exemplary embodiments and implementation modes in detail.

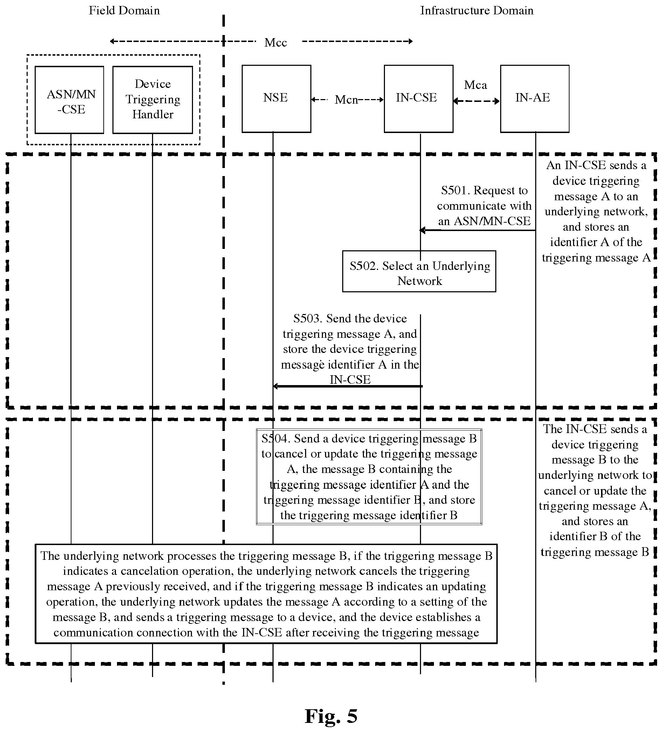

Fig. 5 is a sequence diagram of canceling or updating a device triggering message according to an exemplary embodiment of the present disclosure. As shown in Fig. 5, the flow may include the following acts.

At act S501, an IN-CSE may receive a request for communicating with an ASN/MN-CSE from an IN-AE.

At act S502, the IN-CSE may select an underlying network (which is an NSE in the figure).

At act S503, the IN-CSE may send a device triggering message A (which may be called message A for short) to the underlying network, and store a device triggering message identifier A in the IN-CSE.

The device triggering message A may contain a parameter such as the device triggering message identifier A, which is the same in other embodiments.

At act S504, the IN-CSE may send a device triggering message B (which may be called message B for short) to the underlying network to cancel or update the device triggering message A, and store the device triggering message identifier B. The device triggering message B may contain a parameter such as the device triggering message identifier A and a device triggering message identifier B.

At act S505, the underlying network may process the device triggering message B. If the device triggering message B indicates a cancelation operation, the underlying network may cancel the device triggering message A previously received. If the device triggering message B indicates an updating operation, the underlying network may update the device triggering message A according to a setting of the device triggering message B, and send a triggering message to a device (which is the ASN/MN-CSE in the figure). The device may establish a communication connection with the IN-CSE after receiving the device triggering message.

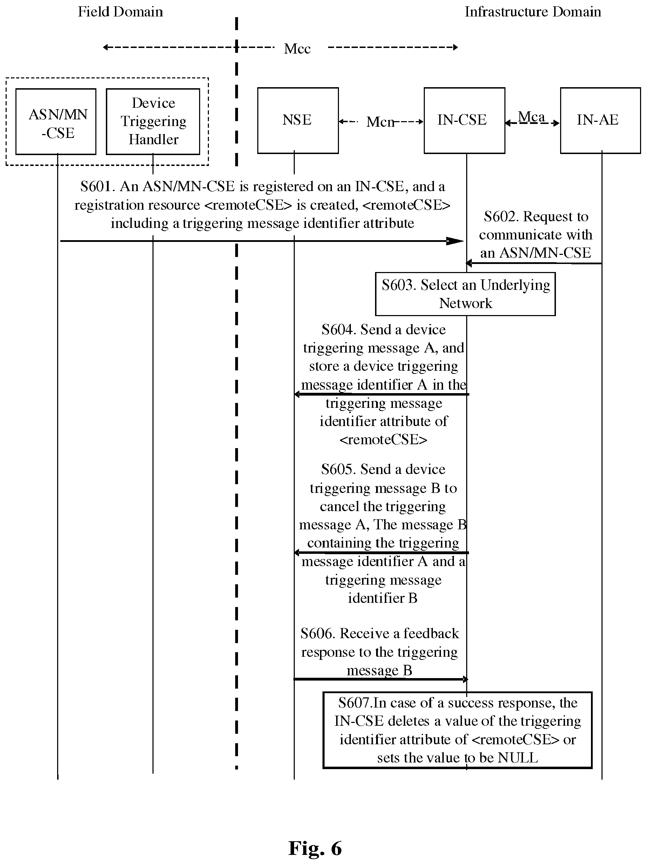

Fig. 6 is a first sequence diagram of canceling a triggering message according to an exemplary embodiment of the present disclosure. As shown in Fig. 6, a device triggering message identifier in the exemplary embodiment is stored in an attribute of a device registration resource.

At act S601, an ASN/MN-CSE is registered on an IN-CSE, and the IN-CSE creates a registration resource <remoteCSE>, <remoteCSE> including a device triggering message identifier attribute.

At act S602, the IN-CSE may receive a request for communicating with the ASN/MN-CSE from an IN-AE.

At act S603, the IN-CSE may find that the ASN/MN-CSE is offline or not activated, and therefore select an underlying network for device triggering.

At act S604, the IN-CSE may send a device triggering message A to the underlying network, and store a device triggering message identifier A in the device triggering message identifier attribute of <remoteCSE>.

At act S605, for a certain reason, for example the ASN/MN-CSE may be automatically reconnected or the IN-CSE may intend to cancel the device triggering message A, the IN-CSE may send a device triggering message B to cancel the device triggering message A. The device triggering message B may contain a parameter such as the device triggering message identifier A and a device triggering message identifier B.

At act S606, the IN-CSE may receive a feedback response to the device triggering message B from the underlying network.

At act S607, in case of a success response, the IN-CSE may delete a value of the triggering identifier attribute of <remoteCSE> or set the value to be NULL. In case of a failure response, the IN-CSE may continue sending a cancelation message according to acts S605 and S606 or stop performing subsequent act.

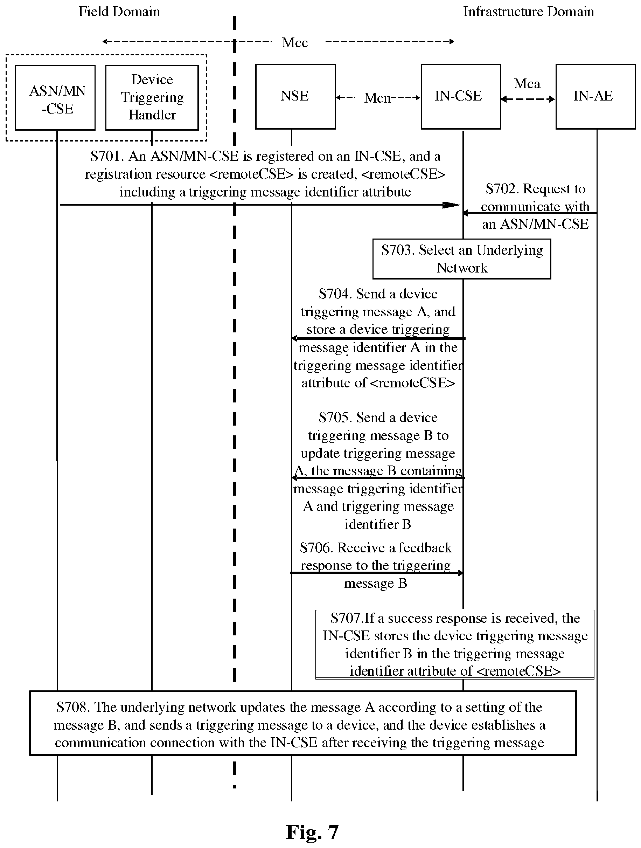

Fig. 7 is a first sequence diagram of updating a triggering message according to an exemplary embodiment of the present disclosure. As shown in Fig. 7, a device triggering message identifier in the embodiment is stored in an attribute of a device registration resource.

At act S701, an ASN/MN-CSE is registered on an IN-CSE, and the IN-CSE creates a registration resource <remoteCSE>, <remoteCSE> including a device triggering message identifier attribute.

At act S702, the IN-CSE may receive a request for communicating with the ASN/MN-CSE from an IN-AE.

At act S703, the IN-CSE may find that the ASN/MN-CSE is offline or not activated, and therefore select an underlying network for device triggering.

At act S704, the IN-CSE may send a device triggering message A to the underlying network, and store a device triggering message identifier A in the device triggering message identifier attribute of <remoteCSE>.

At act S705, for a certain reason, for example the IN-CSE may intend to update the device triggering message A, the IN-CSE may send a device triggering message B to the underlying network to update the device triggering message A. The device triggering message B may contain a parameter such as the device triggering message identifier A and a device triggering message identifier B.

At act S706, the IN-CSE may receive a feedback response to the device triggering message B from the underlying network.

At act S707, in case of a success response, the IN-CSE may store the device triggering message identifier B in the device triggering message identifier attribute of <remoteCSE>. In case of a failure response, the IN-CSE may continue sending an updating message according to acts S705 and S706 or stop performing subsequent act.

At act S708, the underlying network may update the device triggering message A according to a setting of the device triggering message B, and send a triggering message to the device. The device may establish a communication connection with the IN-CSE after receiving the device triggering message.

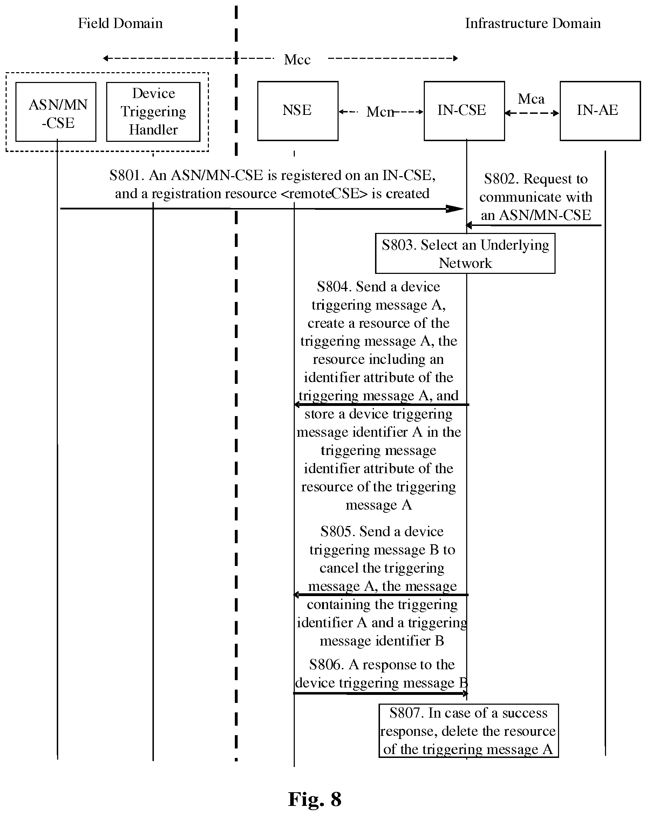

Fig. 8 is a second sequence diagram of canceling a triggering message according to an exemplary embodiment of the present disclosure. As shown in Fig. 8, a device triggering message identifier in the embodiment is stored in a device triggering message identifier attribute of a triggering message resource.

At act S801, an ASN/MN-CSE is registered on an IN-CSE, and a registration resource <remoteCSE> is created.

At act S802, the IN-CSE may receive a request for communicating with the ASN/MN-CSE from an IN-AE.

At act S803, the IN-CSE may find that the ASN/MN-CSE is offline or not activated, and therefore select an underlying network for device triggering.

At act S804, the IN-CSE may send a device triggering message A to the underlying network, create a resource of the device triggering message A, the resource including an identifier attribute of the device triggering message A, and store a device triggering message identifier A in the device triggering message identifier attribute of the resource of the device triggering message A.

At act S805, for a certain reason, for example the ASN/MN-CSE may be automatically reconnected or the IN-CSE may intend to cancel the device triggering message A, the IN-CSE may send a device triggering message B to the underlying network to cancel the device triggering message A. The device triggering message B may contain a parameter such as the device triggering message identifier A and a device triggering message identifier B.

At act S806, the IN-CSE may receive a response to the device triggering message B from the underlying network.

At act S807, in case of a success response, the IN-CSE may delete the resource of the device triggering message A. In case of a failure response, the IN-CSE may continue sending a cancelation message or stop performing subsequent act according to acts S805 and S806.

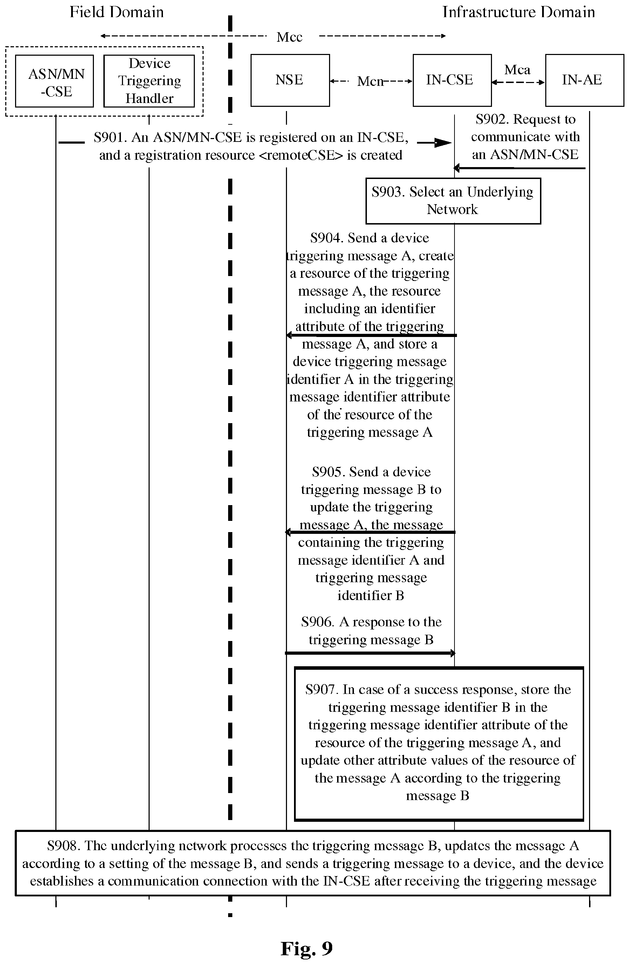

Fig. 9 is a first sequence diagram of updating a triggering message according to an exemplary embodiment of the present disclosure. As shown in Fig. 9, a device triggering message identifier in the embodiment is stored in a device triggering message identifier attribute of a triggering message resource.

At act S901, an ASN/MN-CSE is registered on an IN-CSE, and a registration resource <remoteCSE> is created.

At act S902, the IN-CSE may receive a request for communicating with the ASN/MN-CSE from an IN-AE.

At act S903, the IN-CSE may find that the ASN/MN-CSE is offline or not activated, and therefore select an underlying network for device triggering.

At act S904, the IN-CSE may send a device triggering message A to the underlying network, create a resource of the device triggering message A, the resource including an identifier attribute of the device triggering message A, and store the device triggering message identifier A in the device triggering message identifier attribute of the resource of the device triggering message A.

At act S905, the IN-CSE may send a device triggering message B to the underlying network to update the device triggering message A. The device triggering message B may contain a parameter such as the device triggering message identifier A and a device triggering message identifier B.

At act S906, the IN-CSE may receive a response to the device triggering message B from the underlying network.

At act S907, in case of a success response, the IN-CSE may store the device triggering message identifier B in the device triggering message identifier attribute of the resource of the device triggering message A, and update other attribute values of the resource of the device triggering message A according to the device triggering message B. In case of a failure response, the IN-CSE may continue sending a cancelation message or stop performing subsequent act according to acts S905 and S906.

At act S908, the underlying network may process the device triggering message B, update the device triggering message A according to a setting of the device triggering message B, and send a triggering message to the device. The device may establish a communication connection with the IN-CSE after receiving the device triggering message.

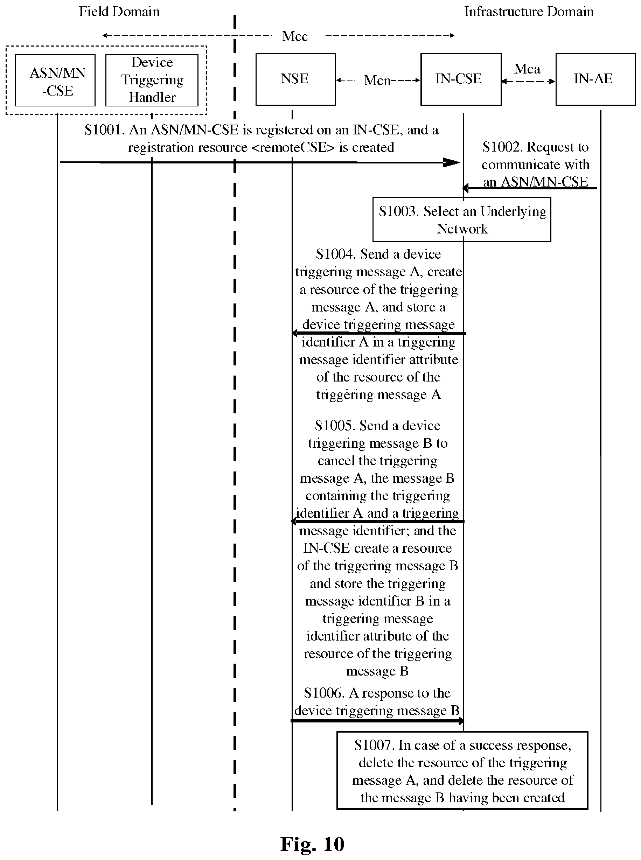

Fig. 10 is a third sequence diagram of canceling a triggering message according to an exemplary embodiment of the present disclosure. A device triggering message canceling method is shown in Fig. 10. A device triggering message identifier in the embodiment is stored in a device triggering message identifier attribute of a triggering message resource, and a new triggering resource is created for each new triggering message.

At act S1001, an ASN/MN-CSE is registered on an IN-CSE, and a registration resource <remoteCSE> is created.

At act S1002, the IN-CSE may receive a request for communicating with the ASN/MN-CSE from an IN-AE.

At act S1003, the IN-CSE may find that the ASN/MN-CSE is offline or not activated, and therefore select an underlying network for device triggering.

At act S1004, the IN-CSE may send a device triggering message A to the underlying network, create a resource of the device triggering message A, the resource including an identifier attribute of the device triggering message A, and store a device triggering message identifier A in the device triggering message identifier attribute of the resource of the device triggering message A.

At act S1005, for a certain reason, for example the ASN/MN-CSE may be automatically reconnected or the IN-CSE may intend to cancel the device triggering message A, the IN-CSE may send a device triggering message B to the underlying network to cancel the device triggering message A. The device triggering message B may contain a parameter such as the device triggering message identifier A and a device triggering message identifier B. The IN-CSE may create a resource of the device triggering message B and store the device triggering message identifier B in a device triggering message identifier attribute of the resource of the device triggering message B.

At act S1006, the IN-CSE may receive a response to the device triggering message B from the underlying network.

At act S1007, in case of a success response, the resource of the device triggering message A may be deleted, and the resource of the device triggering message B may be deleted if having been created. In case of a failure response, the IN-CSE may continue sending a cancelation message or stop performing subsequent act according to acts S1005 and S1006.

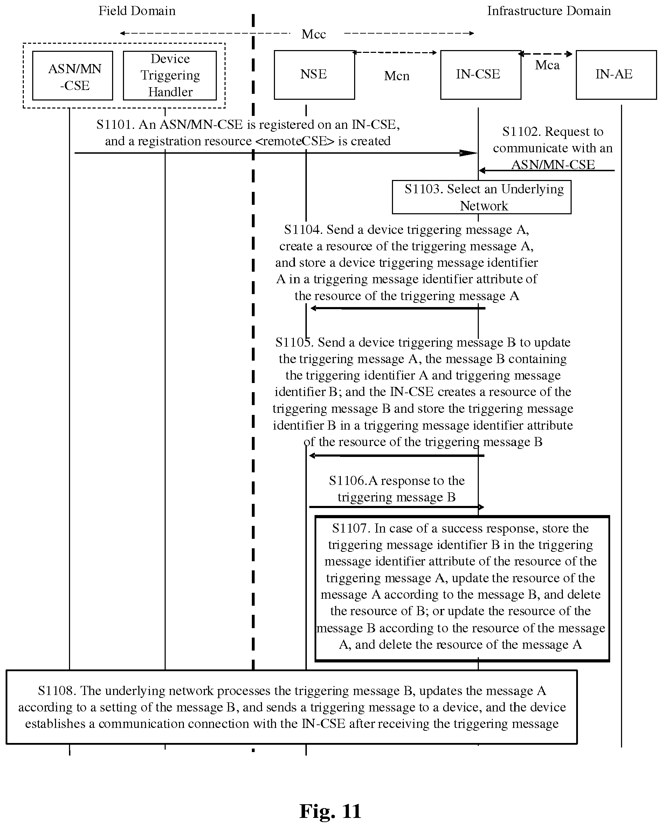

Fig. 11 is a third sequence diagram of updating a triggering message according to an exemplary embodiment of the present disclosure. As shown in Fig. 11, a device triggering message identifier in the embodiment is stored in a device triggering message identifier attribute of a triggering message resource, and a new triggering resource is created for each new triggering message.

At act S1101, an ASN/MN-CSE is registered on an IN-CSE, and a registration resource <remoteCSE> is created.

At act S1102, the IN-CSE may receive a request for communicating with the ASN/MN-CSE from an IN-AE.

At act S1103, the IN-CSE may find that the ASN/MN-CSE is offline or not activated, and therefore select an underlying network for device triggering.

At act S1104, the IN-CSE may send a device triggering message A to the underlying network, create a resource of the device triggering message A, the resource including an identifier attribute of the device triggering message A, and store the device triggering message identifier A in the device triggering message identifier attribute of the resource of the device triggering message A.

At act S1105, the IN-CSE may send a device triggering message B to update the device triggering message A. The device triggering message B may contain a parameter such as the device triggering message identifier A and a device triggering message identifier B. The IN-CSE may create a resource of the device triggering message B and store the device triggering message identifier B in a device triggering message identifier attribute of the resource of the device triggering message B.

At act S1106, the IN-CSE may receive a response to the device triggering message B from the underlying network.

At act S1107, in case of a success response, the IN-CSE may store the device triggering message identifier B in the device triggering message identifier attribute of the resource of the device triggering message A, update the resource of the device triggering message A according to the device triggering message B, and delete the resource of the device triggering message B, or delete the resource of the device triggering message A. In case of a failure response, the IN-CSE may continue sending a cancelation message or stop performing subsequent act according to acts S1105 and S1106.

At act S1108, the underlying network may process the device triggering message B, update the device triggering message A according to a setting of the device triggering message B, and send a triggering message to the device. The device may establish a communication connection with the IN-CSE after receiving the device triggering message.

From the above descriptions about the implementation modes, those skilled in the art may clearly know that the method according to the embodiment may be implemented in a manner of combining software and a necessary universal hardware platform, and of course, may also be implemented through hardware, and under many circumstances, the former may be a preferred implementation mode. Based on such an understanding, the technical solutions of the present disclosure substantially or partially making contributions to a conventional art may be embodied in form of software product. The computer software product may be stored in a storage medium (which may be a Read-Only Memory (ROM)/Random Access Memory (RAM), a magnetic disk and an optical disk), including a plurality of instructions configured to enable a terminal device (which may be a mobile phone, a computer, a server, a network device or the like) to execute the method of each embodiment of the present disclosure.

An embodiment of the present disclosure also provides a storage medium. In the embodiment, the storage medium may be configured to store a program code configured to execute the method acts of the abovementioned embodiment.

In the embodiment, the storage medium may include, but not limited to: various media capable of storing program codes such as a U disk, a ROM, a RAM, a mobile hard disk, a magnetic disk or an optical disk.

In the embodiment, the processor may execute the method acts of the abovementioned embodiment according to the program code stored in the storage medium.

In an exemplary embodiment, all or part of acts of the abovementioned embodiments may also be implemented by virtue of an integrated circuit, and these acts may form multiple integrated circuit modules respectively, or multiple modules or acts therein form a single integrated circuit module for implementation.

The device/function module/function unit in the abovementioned embodiments may be implemented by adopting a universal computing device, and they may be concentrated on a single computing device, and may also be distributed on a network formed by multiple computing devices.

When being implemented in form of a software function module and sold or used as an independent product, the device/function module/function unit in the abovementioned embodiments may be stored in a computer-readable storage medium. The abovementioned computer-readable storage medium may be a ROM, a magnetic disk, an optical disk or the like.

Obviously, those skilled in the art should know that each module or each step of the present disclosure may be implemented by a universal computing device. The modules or acts may be concentrated on a single computing device or distributed on a network formed by a plurality of computing devices, and may optionally be implemented by program codes executable for the computing devices, so that the modules or acts may be stored in a storage device for execution with the computing devices. The shown or described acts may be executed in sequences different from those described here in some circumstances, or may form each integrated circuit module respectively, or multiple modules or acts therein may form a single integrated circuit module for implementation. Therefore, the present disclosure is not limited to any specific hardware and software combination.

### Industrial Applicability

According to the solutions of some embodiments of the present disclosure, an Internet of things service platform may send a first device triggering message for triggering a device registered on the Internet of things service platform to the underlying network, and store a first identifier corresponding to the first device triggering message. The Internet of things service platform may send a second device triggering message to the underlying network, the second device triggering message may contain the first identifier, and the second device triggering message may be used for indicating the underlying network to cancel or update the first device triggering message according to the first identifier. Therefore, a problem that a device triggering method may not implement cancelation or updating of a device triggering message may be solved, and cancelation or updating of the device triggering message may be achieved.

## Claims

1. A method for processing device triggering information, comprising:
sending, by an Internet of things service platform, to an underlying network a first device triggering message for triggering a device registered on the Internet of things service platform, and storing, by the Internet of things service platform, a first identifier corresponding to the first device triggering message (S302); and
sending, by the Internet of things service platform, a second device triggering message to the underlying network, wherein the second device triggering message contains the first identifier, and the second device triggering message is used for indicating the underlying network to cancel or update the first device triggering message according to the first identifier (S304),
wherein in a case that the second device triggering message sent to the underlying network by the Internet of things service platform is used for cancelling the first device triggering message, the Internet of things service platform deletes the first identifier or deletes both the first identifier and a second identifier corresponding to the second device triggering message after receiving a cancelation success response from the underlying network.

2. The method as claimed in claim 1, wherein the Internet of things service platform further creates a second triggering resource after sending the second device triggering message to the underlying network, wherein the second triggering resource stores the second identifier.

3. The method as claimed in claim 1, wherein
the Internet of things service platform deletes the first identifier in one of the following manners:
deleting the first identifier in a registration resource or setting an identifier attribute corresponding to the first identifier in the registration resource to be null, wherein the registration resource is a resource created when the device is registered on the Internet of things service platform, and the registration resource stores the first identifier; or
deleting a first triggering resource, wherein first triggering resource is a resource created when the Internet of things service platform sends the first device triggering message to the underlying network, and the first triggering resource stores the first identifier; and
the Internet of things service platform deletes the second identifier in the following manner:
deleting a second triggering resource, wherein the second triggering resource is a resource created after the Internet of things service platform sends the second device triggering message to the underlying network, and the second triggering resource stores the second identifier corresponding to the second triggering resource.

4. The method as claimed in claim 1 or 2, wherein in a case that the second device triggering message sent to the underlying network by the Internet of things service platform is used for updating the first device triggering message, the Internet of things service platform stores the second identifier after receiving an update success response from the underlying network.

5. The method as claimed in claim 4, wherein the Internet of things service platform stores the second identifier in one of the following manners:
updating an identifier attribute of a registration resource corresponding to the first identifier with the second identifier, wherein the registration resource is a resource created when the device is registered on the Internet of things service platform, and the registration resource stores the first identifier; or
updating an identifier attribute of a first triggering resource corresponding to the first identifier with the second identifier, wherein the first triggering resource is a resource created when the Internet of things service platform sends the first device triggering message to the underlying network, and the first triggering resource stores the first identifier; and updating the first triggering resource according to the second triggering message; or
updating an identifier attribute of a first triggering resource corresponding to the first identifier with the second identifier, wherein the first triggering resource is a resource created when the Internet of things service platform sends the first device triggering message to the underlying network, and the first triggering resource stores the first identifier; updating the first triggering resource according to the second triggering resource; and deleting the second triggering resource; or
storing the second identifier in the second triggering resource, and deleting the first triggering resource.

6. The method as claimed in claim 1 or 2, wherein the first device triggering message sent by the Internet of things service platform contains the first identifier, and the second device triggering message sent by the Internet of things service platform further contains the second identifier corresponding to the second device triggering message.

7. A device for processing device triggering information, arranged on an Internet of things service platform, the processing device comprising:
a first sending module (42), configured to send to an underlying network a first device triggering message for triggering a device registered on the Internet of things service platform, and store a first identifier corresponding to the first device triggering message; and
a second sending module (44), configured to send a second device triggering message to the underlying network, wherein the second device triggering message contains the first identifier, and the second device triggering message is used for indicating the underlying network to cancel or update the first device triggering message according to the first identifier,
a deletion module, configured to, in a case that the second device triggering message sent to the underlying network by the second sending module is used for cancelling the first device triggering message, delete the first identifier or delete both the first identifier and a second identifier corresponding to the second device triggering message after a cancelation success response is received from the underlying network.

8. The device as claimed in claim 7, further comprising:
a creation module, configured to, after the second sending module sends the second device triggering message to the underlying network, create a second triggering resource, wherein the second triggering resource stores the second identifier.

9. The device as claimed in claim 7, wherein
the deletion module comprises at least one of the following units:
a first deletion unit, configured to delete the first identifier in a registration resource or set an identifier attribute corresponding to the first identifier in the registration resource to be null, wherein the registration resource is a resource created when the device is registered on the Internet of things service platform, and the registration resource stores the first identifier;
a second deletion unit, configured to delete a first triggering resource, wherein the first triggering resource is a resource created when the Internet of things service platform sends the first device triggering message to the underlying network, and the first triggering resource stores the first identifier; and
a third deletion unit, configured to delete a second triggering resource, wherein the second triggering resource is a resource created after the Internet of things service platform sends the second device triggering message to the underlying network, and the second triggering resource stores the second identifier corresponding to the second triggering resource.

10. The device according to claim 7 or 8, further comprising:
an updating module, configured to, in a case that the second device triggering message sent to the underlying network by the second sending module is used for updating the first device triggering message, store the second identifier after an update success response is received from the underlying network.

11. The device as claimed in claim 10, wherein
the updating module comprises at least one of the following units:
a first updating unit, configured to update an identifier attribute of a registration resource corresponding to the first identifier with the second identifier, wherein the registration resource is a resource created when the device is registered on the Internet of things service platform, and the registration resource stores the first identifier;
a second updating unit, configured to update an identifier attribute of a first triggering resource corresponding to the first identifier with the second identifier, and update the first triggering resource according to the second triggering message, wherein the first triggering resource is a resource created when the Internet of things service platform sends the first device triggering message to the underlying network, and the first triggering resource stores the first identifier;
a third updating unit, configured to update an identifier attribute of a first triggering resource corresponding to the first identifier with the second identifier, update the first triggering resource according to the second triggering resource, and deleting the second triggering resource, wherein the first triggering resource is a resource created when the Internet of things service platform sends the first device triggering message to the underlying network, and the first triggering resource stores the first identifier; and
a fourth updating unit, configured to store the second identifier in the second triggering resource, and delete the first triggering resource.

12. The device as claimed in claim 7 or 8, wherein
the first device triggering message sent by the first sending module contains the first identifier, and
the second device triggering message sent by the second sending module further contains the second identifier corresponding to the second device triggering message.

13. A storage medium, configured to store a program code configured to execute the method as claimed in any one of claims 1 to 6.

## Patentansprüche

1. Verfahren zum Verarbeiten von Vorrichtungsauslöseinformationen, umfassend:
durch eine Internet-of-Things-Serviceplattform, Senden einer ersten Vorrichtungsauslösenachricht an ein unterlagertes Netzwerk zum Auslösen einer auf der Internet-of-Things-Serviceplattform registrierten Vorrichtung und, durch die Internet-of-Things-Serviceplattform, Speichern einer ersten Kennung, die der ersten Vorrichtungsauslösenachricht entspricht (S302); und
durch die Internet-of-Things-Serviceplattform, Senden einer zweiten Vorrichtungsauslösenachricht an das unterlagerte Netzwerk, wobei die zweite Vorrichtungsauslösenachricht die erste Kennung enthält und die zweite Vorrichtungsauslösenachricht zum Hinweisen des unterlagerten Netzwerks darauf verwendet wird, die erste Vorrichtungsauslösenachricht gemäß der ersten Kennung zu annullieren oder zu aktualisieren (S304),
wobei in einem Fall, in dem die durch die Internet-of-Things-Serviceplattform an das unterlagerte Netzwerk gesendet zweite Vorrichtungsauslösenachricht zum Annullieren der ersten Vorrichtungsauslösenachricht verwendet wird, die Internet-of-Things-Serviceplattform die erste Kennung löscht oder sowohl die erste Kennung als auch eine zweite Kennung löscht, die der zweiten Vorrichtungsauslösenachricht entsprechen, nachdem eine Annullierungserfolg-Antwort vom unterlagerten Netzwerk empfangen wurde.

2. Verfahren nach Anspruch 1, wobei die Internet-of-Things-Serviceplattform ferner nach dem Senden der zweiten Vorrichtungsauslösenachricht an das unterlagerte Netzwerk eine zweite Auslöseressource erstellt, wobei die zweite Auslöseressource die zweite Kennung speichert.

3. Verfahren nach Anspruch 1, wobei
die Internet-of-Things-Serviceplattform die erste Kennung auf eine der folgenden Arten löscht:
Löschen der ersten Kennung in einer Registrierungsressource oder Setzen eines der ersten Kennung in der Registrierungsressource entsprechenden Kennungsattributs auf null, wobei die Registrierungsressource eine Ressource ist, die erstellt wird, wenn die Vorrichtung auf der Internet-of-Things-Serviceplattform registriert wird und die Registrierungsressource die erste Kennung speichert; oder
Löschen einer ersten Auslöseressource, wobei die erste Auslöseressource eine Ressource ist, die erstellt wird, wenn die Internet-of-Things-Serviceplattform die erste Vorrichtungsauslösenachricht an das unterlagerte Netzwerk sendet und die erste Auslöseressource die erste Kennung speichert; und
die Internet-of-Things-Serviceplattform die zweite Kennung auf die folgende Art löscht:
Löschen einer zweiten Auslöseressource, wobei die zweite Auslöseressource eine Ressource ist, die erstellt wird, nachdem die Internet-of-Things-Serviceplattform die zweite Vorrichtungsauslösenachricht an das unterlagerte Netzwerk gesendet hat und die zweite Auslöseressource die zweite Kennung speichert, die der zweiten Auslöseressource entspricht.

4. Verfahren nach Anspruch 1 oder 2, wobei in einem Fall, in dem die durch die Internet-of-Things-Serviceplattform an das unterlagerte Netzwerk gesendete zweite Vorrichtungsauslösenachricht zum Aktualisieren der ersten Vorrichtungsauslösenachricht verwendet wird, die Internet-of-Things-Serviceplattform die zweite Kennung speichert, nachdem eine Aktualisierungserfolg-Antwort vom unterlagerten Netzwerk empfangen wurde.

5. Verfahren nach Anspruch 4, wobei die Internet-of-Things-Serviceplattform die zweite Kennung auf eine der folgenden Arten speichert:
Aktualisieren eines Kennungsattributs einer Registrierungsressource, das der ersten Kennung entspricht, mit der zweiten Kennung, wobei die Registrierungsressource eine Ressource ist, die erstellt wird, wenn die Vorrichtung auf der Internet-of-Things-Serviceplattform registriert wird und die Registrierungsressource die erste Kennung speichert; oder
Aktualisieren eines Kennungsattributs einer ersten Auslöseressource, das der ersten Kennung entspricht, mit der zweiten Kennung, wobei die erste Auslöseressource eine Ressource ist, die erstellt wird, wenn die Internet-of-Things-Serviceplattform die Vorrichtungsauslösenachricht an das unterlagerte Netzwerk sendet und die erste Auslöseressource die erste Kennung speichert; und Aktualisieren der ersten Auslöseressource gemäß der zweiten Auslösenachricht; oder
Aktualisieren eines Kennungsattributs einer ersten Auslöseressource, das der ersten Kennung entspricht, mit der zweiten Kennung, wobei die erste Auslöseressource eine Ressource ist, die erstellt wird, wenn die Internet-of-Things-Serviceplattform die Vorrichtungsauslösenachricht an das unterlagerte Netzwerk sendet und die erste Auslöseressource die erste Kennung speichert; Aktualisieren der ersten Auslöseressource gemäß der zweiten Auslösenachricht; und Löschen der zweiten Auslöseressource; oder
Speichern der zweiten Kennung in der zweiten Auslöseressource und Löschen der ersten Auslöseressource.

6. Verfahren nach Anspruch 1 oder 2, wobei die durch die Internet-of-Things-Serviceplattform gesendete erste Vorrichtungsauslösenachricht die erste Kennung enthält und die durch die Internet-of-Things-Serviceplattform gesendete zweite Vorrichtungsauslösenachricht ferner die zweite Kennung enthält, die der zweiten Vorrichtungsauslösenachricht entspricht.

7. Auf einer Internet-of-Things-Serviceplattform angeordnete Vorrichtung zum Verarbeiten von Informationen, wobei die Verarbeitungsvorrichtung umfasst:
ein erstes Sendemodul (42), das eingerichtet ist, um eine erste Vorrichtungsauslösenachricht zum Auslösen einer auf der Internet-of-Things-Serviceplattform registrierten Vorrichtung an ein unterlagertes Netzwerk zu senden und eine erste Kennung zu speichern, die der ersten Vorrichtungsauslösenachricht entspricht; und
ein zweites Sendemodul (44), das eingerichtet ist, um eine zweiten Vorrichtungsauslösenachricht an das unterlagerte Netzwerk zu senden, wobei die zweite Vorrichtungsauslösenachricht die erste Kennung enthält und die zweite Vorrichtungsauslösenachricht und die zweite Geräteauslösenachricht zum Hinweisen des unterlagerten Netzwerks darauf verwendet wird, die erste Geräteauslösenachricht gemäß der ersten Kennung zu annullieren oder zu aktualisieren,
ein Löschmodul, das eingerichtet ist, um in einem Fall, in dem die durch das zweite Sendemodul an das unterlagerte Netzwerk gesendete zweite Vorrichtungsauslösenachricht zum Annullieren der ersten Vorrichtungsauslösenachricht verwendet wird, die erste Kennung zu löschen oder sowohl die erste Kennung als auch eine zweite Kennung zu löschen, die der zweiten Vorrichtungsauslösenachricht entsprechen, nachdem eine Annullierungserfolg-Antwort vom unterlagerten Netzwerk empfangen wurde.

8. Vorrichtung nach Anspruch 7, ferner umfassend:
ein Erstellungsmodul, das eingerichtet ist, um eine zweite Auslöseressource zu erstellen, nachdem das zweite Sendemodul die zweite Vorrichtungsauslösenachricht an das unterlagerte Netzwerk gesendet hat, wobei die zweite Auslöseressource die zweite Kennung speichert.

9. Vorrichtung nach Anspruch 7, wobei
das Löschmodul mindestens eine der folgenden Einheiten umfasst:
eine erste Löscheinheit, die eingerichtet ist, um die erste Kennung in einer Registrierungsressource zu löschen oder ein Kennungsattribut auf null zu setzen, das der ersten Kennung in der Registrierungsressource entspricht, wobei die Registrierungsressource eine Ressource ist, die erstellt wird, wenn die Vorrichtung auf der Internet-of-Things-Serviceplattform registriert wird und die Registrierungsressource die erste Kennung speichert;
eine zweite Löscheinheit, die eingerichtet ist, um eine erste Auslöseressource zu löschen, wobei die erste Auslöseressource eine Ressource ist, die erstellt wird, wenn die Internet-of-Things-Serviceplattform die erste Vorrichtungsauslösenachricht an das unterlagerte Netzwerk sendet und die erste Auslöseressource die erste Kennung speichert; und
eine dritte Löscheinheit, die eingerichtet ist, um eine zweite Auslöseressource zu löschen, wobei die zweite Auslöseressource eine Ressource ist, die erstellt wird, nachdem die Internet-of-Things-Serviceplattform die zweite Vorrichtungsauslösenachricht an das unterlagerte Netzwerk gesendet hat und die zweite Auslöseressource die zweite Kennung speichert, die der zweiten Auslöseressource entspricht.

10. Vorrichtung nach Anspruch 7 oder 8, ferner umfassend:
ein Aktualisierungsmodul, das eingerichtet ist, um in einem Fall, in dem die durch das zweite Sendemodul an das unterlagerte Netzwerk gesendete zweite Vorrichtungsauslösenachricht zum Aktualisieren der ersten Vorrichtungsauslösenachricht verwendet wird, die zweite Kennung zu speichern, nachdem eine Aktualisierungserfolgsantwort vom unterlagerten Netzwerk empfangen wurde.

11. Vorrichtung nach Anspruch 10, wobei
das Aktualisierungsmodul mindestens eine der folgenden Einheiten umfasst:
eine Aktualisierungseinheit, die eingerichtet ist, um ein Kennungsattribut einer Registrierungsressource, das der ersten Kennung entspricht, mit der zweiten Kennung zu aktualisieren, wobei die Registrierungsressource eine Ressource ist, die erstellt wird, wenn die Vorrichtung auf der Internet-of-Things-Serviceplattform registriert wird und die Registrierungsressource die erste Kennung speichert;
eine zweite Aktualisierungseinheit, die eingerichtet ist, um ein Kennungsattribut einer ersten Auslöseressource, das der ersten Kennung entspricht, mit der zweiten Kennung zu aktualisieren und die erste Auslöseressource gemäß der zweiten Auslösenachricht zu aktualisieren, wobei die erste Auslöseressource eine Ressource ist, die erstellt wird, wenn die die Internet-of-Things-Serviceplattform die erste Vorrichtungsauslösenachricht an das unterlagerte Netzwerk sendet und die erste Auslöseressource und die erste Kennung speichert;
eine dritte Aktualisierungseinheit, die eingerichtet ist, um ein Kennungsattribut einer ersten Auslöseressource, die der ersten Kennung entspricht, mit der zweiten Kennung zu aktualisieren, die erste Auslöseressource gemäß der zweiten Auslöseressource zu aktualisieren und die zweite Auslöseressource zu löschen, wobei die erste Auslöseressource eine Ressource ist, die erstellt wird, wenn die Internet-of-Things-Serviceplattform die erste Vorrichtungsauslösenachricht an das unterlagerte Netzwerk sendet und die erste Auslöseressource die erste Kennung speichert; und
eine vierte Aktualisierungseinheit, die eingerichtet ist, um die zweite Kennung in der zweiten Auslöseressource zu speichern und die erste Auslöseressource zu löschen.

12. Vorrichtung nach Anspruch 7 oder 8, wobei
die erste durch das erste Sendemodul gesendete Vorrichtungsauslösenachricht die erste Kennung enthält und
die durch das zweite Sendemodul gesendete zweite Vorrichtungsauslösenachricht ferner die zweite Kennung enthält, die der zweiten Vorrichtungsauslösenachricht entspricht.

13. Speichermedium, das eingerichtet ist, um einen Programmcode zu speichern, der eingerichtet ist, um das Verfahren nach einem der Ansprüche 1 bis 6 auszuführen.

## Revendications

1. Procédé de traitement d'informations de déclenchement de dispositif, comprenant :
l'envoi à un réseau sous-jacent, par une plate-forme de services de l'Internet des objets, d'un premier message de déclenchement de dispositif pour déclencher un dispositif enregistré sur la plate-forme de services de l'Internet des objets et la mémorisation, par la plate-forme de services de l'Internet des objets, d'un premier identifiant correspondant au premier message de déclenchement de dispositif (S302) ; et
l'envoi, par la plate-forme de services de l'Internet des objets, d'un second message de déclenchement de dispositif au réseau sous-jacent, le second message de déclenchement de dispositif contenant le premier identifiant et le second message de déclenchement de dispositif servant à indiquer au réseau sous-jacent d'annuler ou de mettre à jour le premier message de déclenchement de dispositif, en fonction du premier identifiant (S304),
dans lequel dans un cas où le second message de déclenchement de dispositif envoyé au réseau sous-jacent par la plate-forme de services de l'Internet des objets sert à annuler le premier message de déclenchement de dispositif, la plate-forme de services de l'Internet des objets supprime le premier identifiant ou supprime à la fois le premier identifiant et un second identifiant correspondant au second message de déclenchement de dispositif, après la réception d'une réponse de réussite d'annulation du réseau sous-jacent.

2. Procédé selon la revendication 1, dans lequel la plate-forme de services de l'Internet des objets crée en outre une seconde ressource de déclenchement après l'envoi du second message de déclenchement de dispositif au réseau sous-jacent, la seconde ressource de déclenchement stockant le second identifiant.

3. Procédé selon la revendication 1, dans lequel
la plate-forme de services de l'Internet des objets supprime le premier identifiant de l'une des manières suivantes :
suppression du premier identifiant dans une ressource d'enregistrement ou définition d'un attribut identifiant correspondant au premier identifiant dans la ressource d'enregistrement comme étant nul, la ressource d'enregistrement étant une ressource créée lorsque le dispositif est enregistré sur la plate-forme de services de l'Internet des objets et que la ressource d'enregistrement stocke le premier identifiant ; ou
suppression d'une première ressource de déclenchement, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ; et
la plate-forme de services de l'Internet des objets supprime le second identifiant de la manière suivante :
suppression d'une seconde ressource de déclenchement, la seconde ressource de déclenchement étant une ressource créée après que la plate-forme de services de l'Internet des objets a envoyé le second message de déclenchement de dispositif au réseau sous-jacent et que la seconde ressource de déclenchement stocke le second identifiant correspondant à la seconde ressource de déclenchement.

4. Procédé selon la revendication 1 ou 2, dans lequel, dans un cas où le second message de déclenchement de dispositif envoyé au réseau sous-jacent par la plate-forme de services de l'Internet des objets sert à mettre à jour le premier message de déclenchement de dispositif, la plate-forme de services de l'Internet des objets stocke le second identifiant après réception d'une réponse de réussite de mise à jour du réseau sous-jacent.

5. Procédé selon la revendication 4, dans lequel la plate-forme de services de l'Internet des objets stocke le second identifiant selon l'une des manières suivantes :
mise à jour d'un attribut d'identifiant d'une ressource d'enregistrement correspondant au premier identifiant avec le second identifiant, la ressource d'enregistrement étant une ressource créée lorsque le dispositif est enregistré sur la plate-forme de services de l'Internet des objets et que la ressource d'enregistrement stocke le premier identifiant ; ou
mise à jour d'un attribut d'identifiant d'une première ressource de déclenchement correspondant au premier identifiant avec le second identifiant, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ; et mise à jour de la première ressource de déclenchement en fonction du second message de déclenchement ; ou
mise à jour d'un attribut d'identifiant d'une première ressource de déclenchement correspondant au premier identifiant avec le second identifiant, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ; mise à jour de la première ressource de déclenchement en fonction de la seconde ressource de déclenchement ; et suppression de la seconde ressource de déclenchement ; ou
stockage du second identifiant dans la seconde ressource de déclenchement et suppression de la première ressource de déclenchement.

6. Procédé selon la revendication 1 ou 2, dans lequel le premier message de déclenchement de dispositif envoyé par la plate-forme de services de l'Internet des objets contient le premier identifiant et le second message de déclenchement de dispositif envoyé par la plate-forme de services de l'Internet des objets contient en outre le second identifiant, correspondant au second message de déclenchement de dispositif.

7. Dispositif de traitement d'informations de déclenchement de dispositif, disposé sur une plate-forme de services de l'Internet des objets, le dispositif de traitement comprenant :
un premier module d'envoi (42), configuré pour envoyer à un réseau sous-jacent un premier message de déclenchement de dispositif, afin de déclencher un dispositif enregistré sur la plate-forme de services de l'Internet des objets et pour stocker un premier identifiant correspondant au premier message de déclenchement de dispositif ; et
un second module d'envoi (44), configuré pour envoyer un second message de déclenchement de dispositif au réseau sous-jacent, le second message de déclenchement de dispositif contenant le premier identifiant et le second message de déclenchement de dispositif servant à indiquer au réseau sous-jacent d'annuler ou de mettre à jour le premier message de déclenchement de dispositif, en fonction du premier identifiant,
un module de suppression, configuré pour, dans un cas où le second message de déclenchement de dispositif envoyé au réseau sous-jacent par le second module d'envoi sert à annuler le premier message de déclenchement de dispositif, supprimer le premier identifiant ou supprimer à la fois le premier identifiant et un second identifiant correspondant au second message de déclenchement de dispositif après la réception d'une réponse de réussite d'annulation du réseau sous-jacent.

8. Dispositif selon la revendication 7, comprenant en outre :
un module de création, configuré pour, après que le second module d'envoi a envoyé le second message de déclenchement de dispositif au réseau sous-jacent, créer une seconde ressource de déclenchement, la seconde ressource de déclenchement stockant le second identifiant.

9. Dispositif selon la revendication 7, dans lequel
le module de suppression comprend au moins une des unités suivantes :
une première unité de suppression, configurée pour supprimer le premier identifiant dans une ressource d'enregistrement ou pour définir un attribut d'identifiant correspondant au premier identifiant dans la ressource d'enregistrement comme étant nul, la ressource d'enregistrement étant une ressource créée lorsque le dispositif est enregistré sur la plate-forme de services de l'Internet des objets et que la ressource d'enregistrement stocke le premier identifiant ;
une deuxième unité de suppression, configurée pour supprimer une première ressource de déclenchement, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ; et
une troisième unité de suppression, configurée pour supprimer une seconde ressource de déclenchement, la seconde ressource de déclenchement étant une ressource créée après que la plate-forme de services de l'Internet des objets a envoyé le second message de déclenchement de dispositif au réseau sous-jacent et que la seconde ressource de déclenchement stocke le second identifiant correspondant à la seconde ressource de déclenchement.

10. Dispositif selon la revendication 7 ou 8, comprenant en outre :
un module de mise à jour, configuré pour, dans un cas où le second message de déclenchement de dispositif envoyé au réseau sous-jacent par le second module d'envoi sert à mettre à jour le premier message de déclenchement de dispositif, stocker le second identifiant après réception d'une réponse de réussite de mise à jour du réseau sous-jacent.

11. Dispositif selon la revendication 10, dans lequel
le module de mise à jour comprend au moins une des unités suivantes :
une première unité de mise à jour, configurée pour mettre à jour un attribut d'identifiant d'une ressource d'enregistrement correspondant au premier identifiant avec le second identifiant, la ressource d'enregistrement étant une ressource créée lorsque le dispositif est enregistré sur la plate-forme de services de l'Internet des objets et que la ressource d'enregistrement stocke le premier identifiant ;
une deuxième unité de mise à jour, configurée pour mettre à jour un attribut d'identifiant d'une première ressource de déclenchement correspondant au premier identifiant avec le second identifiant et pour mettre à jour la première ressource de déclenchement en fonction du second message de déclenchement, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ;
une troisième unité de mise à jour, configurée pour mettre à jour un attribut d'identifiant d'une première ressource de déclenchement correspondant au premier identifiant avec le second identifiant, pour mettre à jour la première ressource de déclenchement en fonction de la seconde ressource de déclenchement et pour supprimer la seconde ressource de déclenchement, la première ressource de déclenchement étant une ressource créée lorsque la plate-forme de services de l'Internet des objets envoie le premier message de déclenchement de dispositif au réseau sous-jacent et que la première ressource de déclenchement stocke le premier identifiant ; et
une quatrième unité de mise à jour, configurée pour stocker le second identifiant dans la seconde ressource de déclenchement et pour supprimer la première ressource de déclenchement.

12. Dispositif selon la revendication 7 ou 8, dans lequel
le premier message de déclenchement de dispositif envoyé par le premier module d'envoi contient le premier identifiant et
le second message de déclenchement de dispositif, envoyé par le second module d'envoi, contient en outre le second identifiant, correspondant au second message de déclenchement de dispositif.

13. Support d'informations, configuré pour stocker un code de programme configuré pour exécuter le procédé selon l'une quelconque des revendications 1 à 6.
